# EUROPEAN PATENT APPLICATION

(11) **EP 2 090 852 A2**
(43) Date of publication of application: **19.08.2009**
(21) Application number: 09000435.9
(22) Date of filing: 14.01.2009
(51) Int. Cl.: F25B 41/00, B60H 1/32

(54) **Air conditioning system**

(30) Priority: 14.02.2008 JP 2008033718
(71) Applicant: Calsonic Kansei Corporation, Kita-ku Saitama-shi Saitama 331-8501 (JP)
(72) Inventor: Takahashi, Torahide, Saitama-shi Saitama 331-8501 (JP); Nakamura, Kojiro, Saitama-shi Saitama 331-8501 (JP)
(74) Representative: Grünecker, Kinkeldey, Stockmair & Schwanhäusser Anwaltssozietät

(57) **Abstract**

An air conditioning system includes a heat-pump type cooling unit (A) and an air-heating unit (B). On a first circulation path (1) in the cooling unit, provided are a gas-liquid separator (6) provided between an expansion valve (5) and an evaporator (7) for separating refrigerant supplied from the expansion valve into refrigerant gas and refrigerant liquid and sending the refrigerant liquid to the evaporator, a bypass path (9) for flowing the refrigerant gas through the first circulation path with bypassing the evaporator, and a changeover valve (8) for preventing the refrigerant liquid from flowing into the evaporator (7). In warming-up mode, only the refrigerant gas is circulated in a refrigeration cycle. According to the system, air-heating can be achieved by driving the cooling unit even under a condition where outside temperature is very low.

## Description

### BACKGROUND OF THE INVENTION

### 1. Field of the Invention

The present invention relates to an air conditioning system that can achieve air-heating by using a heat-pump type cooling unit.

### 2. Description of Related Art

A conventional air conditioning system is disclosed in Japanese Patent Application Laid-Open Number 2002-98430. As shown in Fig. 9, the air conditioning system includes a heat-pump type cooling unit 100 and an air-heating circulation unit 120. The heat-pump type cooling unit 100 has a first circulation path 101 along which first refrigerant circulates. The air-heating circulation unit 120 has a second circulation path 121 along which second refrigerant circulates.

A compressor 102, a heat-radiating side of an internal heat exchanger 103, an in-compartment heat exchanger 104, an expansion valve 105, an evaporator (external heat exchanger) 106 and a gas-liquid separator 107 are provided on the first circulation path 101 in the heat-pump type cooling unit 100. The in-compartment heat exchanger 104 is provided within an air-conditioning duct 110. A pump 122 for circulating the second refrigerant, a heat-receiving side of the internal heat exchanger 103 and a heater core 123 are provided on the second refrigerant path 121 in the air-heating circulation unit 120.

In a heating mode, the compressor of the heat-pump type cooling unit 100 and the pump 102 of the air-heating circulation unit 120 are both driven. Heat of the first refrigerant is radiated at the in-compartment heat exchanger 104 for air heating. In addition, the heat of the first refrigerant is conducted to the second refrigerant in the internal heat exchanger 103. And then, heat of the second refrigerant is radiated at the heater core 123 for air heating.

In the air conditioning system with the heat-pump type cooling unit 100 as explained above, the cooling unit 100 is driven even at the heating mode and the first refrigerant needs to receive heat from flowing air at the evaporator 106.

### SUMMARY OF THE INVENTION

However, certain degree of temperature difference should be needed between the temperature of the first refrigerant and the temperature of the passing air through the evaporator in order that adequate heat-changing by the evaporator is achieved. In the above conventional example, it may occasionally happen that the desired temperature difference cannot be obtained under a very low temperature condition.

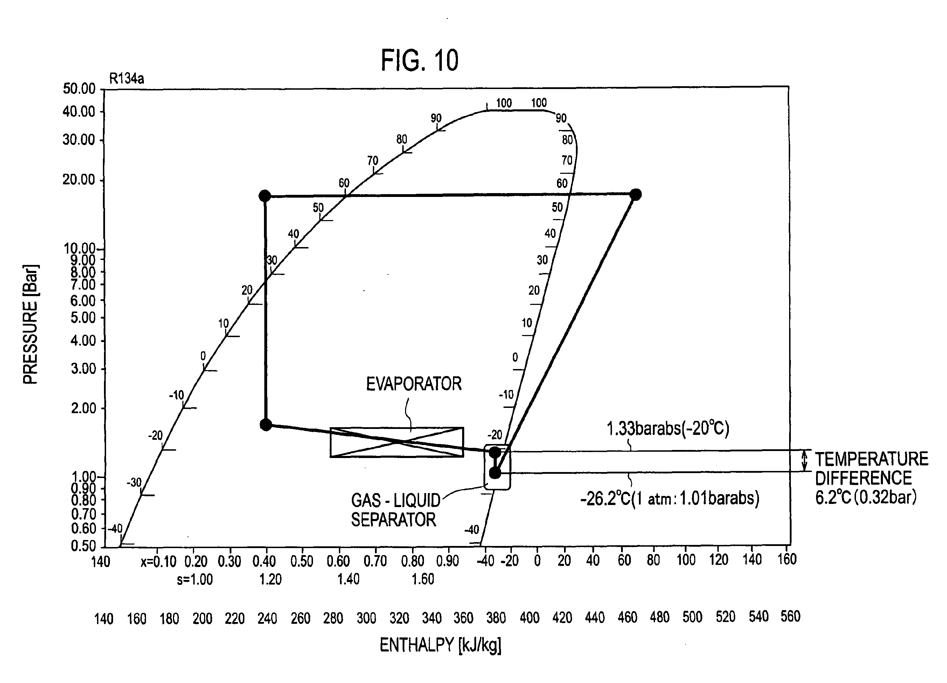

Namely, for example the first refrigerant is HFC134a, evaporating pressure of the refrigerant is 1.01 bar (almost atmosphere pressure: 1 atm) at -26.2 deg C and 1.33 bar at -20.0 deg C as shown in Fig. 10. Therefore, the pressure may be reduced by 0.32 Bar and then the pressure in the first circulation path 101 will be equal-to or lower-than the atmosphere pressure. And then, since the gas-liquid separator 107 is provided between the evaporator 106 and the compressor 102, the evaporator 106 cannot achieve heat-exchanging if flowing resistance through the gas-liquid separator 107 is equivalent to 0.32 bar. As a result, air heating cannot be achieved.

An object of the present invention is to provide an air conditioning system that can achieve air-heating by driving a heat-pump type cooling unit even under a condition where outside temperature is very low.

An aspect of the present invention is to provide an air conditioning system that includes a heat-pump type cooling unit including a first circulation path in which a first refrigerant circulates and an air-heating unit including a second circulation path in which a second refrigerant circulates. A compressor for compressing the first refrigerant, a condenser for heat-exchanging between the first refrigerant and the second refrigerant and radiating heat of the first refrigerant, an expansion unit for expanding the first refrigerant, and an evaporator for heat-exchanging between the first refrigerant expanded by the expansion unit and air to cool the air are provided on the first circulation path. The air-heating unit achieves air-heating by using heat radiated by the condenser. The system further includes a gas-liquid separator provided between the expansion unit and the evaporator for separating the first refrigerant supplied from the expansion unit into first refrigerant gas and first refrigerant liquid and sending the first refrigerant liquid to the evaporator, a bypass path for flowing the first refrigerant gas through the first circulation path with bypassing the evaporator, and a refrigerant liquid flow preventing unit for preventing the first refrigerant liquid from flowing into the evaporator.

According to the aspect of the present invention, the first refrigerant liquid is prevented from flowing into the evaporator by the refrigerant liquid flow preventing unit and only the first refrigerant gas is circulated through the bypass path (the warming-up mode). As a result, the evaporator does not achieve heat-exchanging but heat quantity equivalent to work of the compressor is used for air-heating. Therefore, air-heating can be achieved even under a condition where outside temperature is very low.

It is preferable that a pump for circulating the second refrigerant, a component container for arranging the condenser also on the second circulation path, a heater core for heating air by heat-exchanging between the second refrigerant and the air, and a radiator for radiating heat of the second refrigerant are provided on the second circulation path. The second refrigerant is fluid to achieve heat-exchanging with sensible heat change

According to this, air-heating can be done by way of heat-radiation by the heater core in a hearing mode and air-cooling can be done by way of heat-radiation by the radiator in a cooling mode. Note that, if the condenser is a water-cooling type with higher heat-transfer efficiency than an air-cooling type, it can be down-sized and thereby flowing resistance of the first refrigerant can be reduced. As a result, since needed power for driving the compressor can be reduced by the flowing resistance reduction, driving force for the compressor can be saved and thereby the compressor can be down-sized. In addition, if the refrigerant in the second circulation path does not change its phase in a liquid phase but takes sensible heat change, heat-transfer efficiency can be further improved and down-sizing can be achieved.

It is preferable that a fist orifice and a second orifice are capable of provided on the bypass path alternatively.

According to this, even if the refrigerant liquid flows through the bypass path, the refrigerant liquid is gasified again. Therefore, it can be prevented that the refrigerant liquid returns to the compressor.

It is preferable that the refrigerant liquid flow preventing unit is a changeover valve capable of moving between a first position and a second position. When the changeover valve is set to the first position, the bypass path is communicated with the first circulation path and the first circulation path is blocked so as not to flow the first refrigerant liquid into the evaporator. When the changeover valve is set to the second position, the bypass path is communicated with the first circulation path and the first circulation path is opened so as to flow the first refrigerant liquid into the evaporator.

According to this, since operation mode (between the warming-up mode and the heating/cooling mode) can be changed over by way of changeover control of the changeover valve 8, changeover operation can be done easily.

It is further preferable that the changeover valve has a first orifice to make the first refrigerant gas passing through at the first position and a second orifice to make the first refrigerant gas passing through at the first position. Flowing resistance of the first orifice is set to be optimum for warming-up mode and flowing resistance of the second orifice is set to be optimum for heating/cooling mode.

According to this, the changeover valve is controlled so that the refrigerant gas passes through the fist orifice in the warm-up mode and passes through the second orifice in the heating/cooling mode. Although flow quantity of the refrigerant gas may be differentiated between the warming-up mode and the heating/cooling mode, appropriate flowing resistance can be set for each mode.

It is preferable that the bypass path passes through a position where the first refrigerant liquid is normally held within a refrigerant tank within the gas-liquid separator. The inside of the bypass path communicates with the inside of the refrigerant tank through an oil breed hole at the position.

According to this, since oil is circulated together with the refrigerant gas downstream the bypass path, the oil can be returned to the compressor even in the warming-up mode. As a result, reliability of the compressor can be ensured.

It is preferable that changeover between the warming-up mode (it is prevented that the first refrigerant liquid flows into the evaporator) and the heating mode (it is allowed that the refrigerant liquid flows into the evaporator) is done based on at least one of intake air temperature into the evaporator and refrigerant pressure at an inlet side of the compressor.

According to this, since it depends on the intake air temperature of the evaporator whether or not the evaporator can done appropriate heat-exchanging, mode changeover can be done appropriately by way of the mode changeover based on the intake air temperature of the evaporator.

Alternatively, since it depends on the refrigerant pressure at the inlet side of the compressor whether or not the refrigerant pressure at the inlet side of the compressor is equal-to or lower-than the atmosphere pressure, mode changeover can be done appropriately by way of the mode changeover based on the refrigerant pressure at the inlet side of the compressor.

### BRIEF DESCRIPTION OF THE DRAWINGS

Fig. 1 is a configuration diagram of an air conditioning system according to an embodiment of the present invention;
Fig. 2 is a configuration diagram of a gas-liquid separator in the embodiment of the present invention;
Fig. 3A is a configuration diagram showing a changed-over position of a changeover valve under an warming-up mode in the embodiment of the present invention;
Fig. 3B is a configuration diagram showing a changed-over position of the changeover valve under a heating mode or a cooling mode in the embodiment of the present invention;
Fig. 4 is a configuration diagram of main elements in an air-conditioning duct in the embodiment of the present invention;
Fig. 5 is a circuit block diagram of a control system in the embodiment of the present invention;
Fig. 6 is a configuration diagram showing a flow of refrigerant under the idle warming-up mode in the embodiment of the present invention;
Fig. 7 is a configuration diagram showing a flow of refrigerant under the heating mode in the embodiment of the present invention;
Fig. 8 is a P-h diagram on which shown is a condition of a heat-pump type cooling unit (refrigeration cycle) in the embodiment of the present invention;

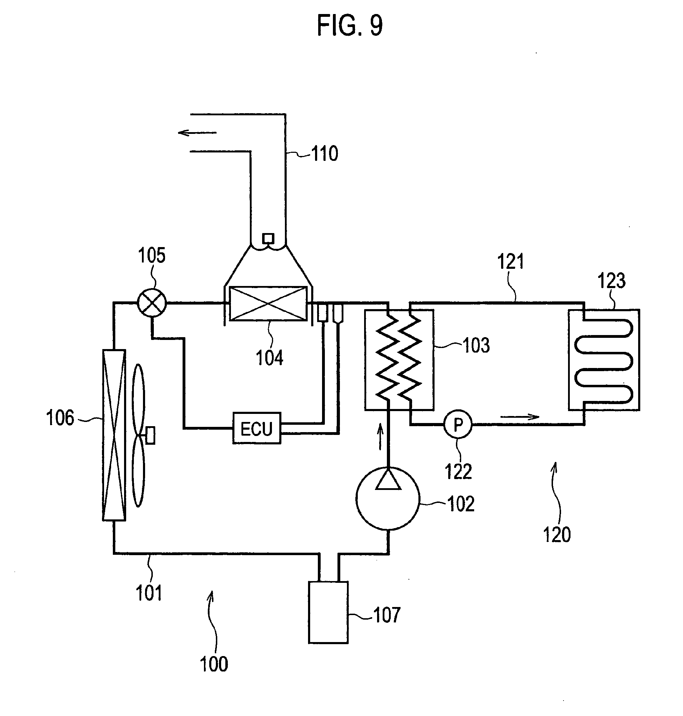

Fig. 9 is a configuration diagram of a conventional air conditioning system; and
Fig. 10 is a P-h diagram on which shown is a condition of a conventional heat-pump type cooling unit (refrigeration cycle).

### DETAILED DESCRIPTION OF THE EMBODIMENT

Hereinafter, one embodiment according to the present invention will be explained with reference to drawings.

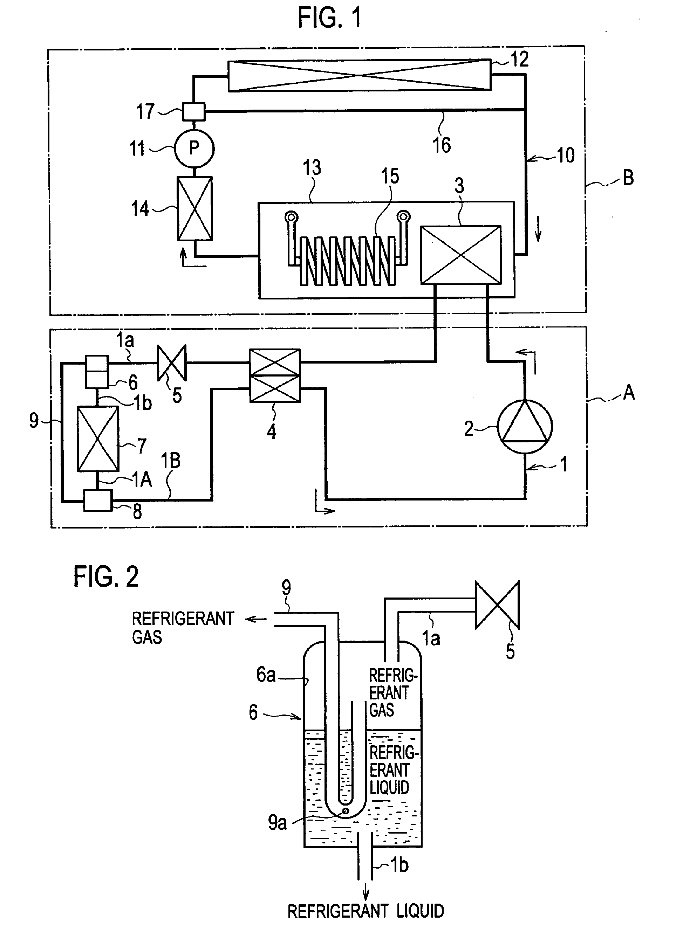

As shown in Fig. 1, an air conditioning system is combined of a heat-pump type cooling unit A and an air-heating circulation unit B.

The heat-pump type cooling unit A includes a first circulation path 1. The first circulation path 1 is filled with first refrigerant (HFC134a). A compressor 2, a water-cooled condenser 3, an internal heat exchanger 4, an expansion valve (expansion unit) 5, a gas-liquid separator 6, an evaporator 7 and a changeover valve (refrigerant liquid flow preventing unit) 8 are provided on the first circulation path 1 in this order.

The compressor 2 inhales the relatively low-temperature and pressure first refrigerant and discharges the high-temperature and pressure first refrigerant after compressing it.

The water-cooled condenser 3 is arranged within an after-mentioned unit container 13 on the second circulation path 10. The first refrigerant output from the compressor 2 is cooled by the second refrigerant. Specifically, heat-exchanging is achieved between the first refrigerant and the second refrigerant at the water-cooled condenser 3. The second refrigerant is heated by the first refrigerant.

The internal heat exchanger 4 achieves heat-exchanging between the first refrigerant output from the water-cooled condenser 3 and the low-temperature first refrigerant output from the evaporator 7. The first refrigerant output from the water-cooled condenser 3 is further cooled down.

The expansion valve 5 expands the first refrigerant (reduce the pressure of the first refrigerant) had passed through the internal heat exchanger 4 and sends it to the gas-liquid separator 6 as a low-temperature and pressure gas.

The gas-liquid separator 6 separates the first refrigerant output from the expansion valve 5 into gas phase and liquid phase. The first refrigerant in the liquid phase is temporally held in the gas-liquid separator 6. Detailed configuration of the gas-liquid separator 6 will be explained later in detail.

The evaporator 7 achieves heat-exchanging between the first refrigerant liquid output from the gas-liquid separator 6 and air had passed through the evaporator 7. The air had passed through the evaporator 7 is cooled down by the first refrigerant. The evaporator 7 is provided within an air-conditioning duct 30 as explained later.

The changeover valve 8 changes over the flow of the first refrigerant to make the first refrigerant flow into the evaporator 7 or not. Detailed configuration of the changeover valve 8 will be explained later in detail.

A bypass path 9 for the refrigerant gas is provided in the first circulation path 1 so as to communicate the gas-liquid separator 6 and the changeover valve 8.

The air-heating circulation unit B includes a second circulation path 10. The second circulation path 10 is filled with second refrigerant (liquid such as water, antifreeze solution or the like). A pump 11, a radiator 12, the unit container 13 and a heater core 14 are provided on the second circulation path 10 in this order. The unit container 13 is a space having a larger cross-sectional area than that of the second circulation path 10. The above-mentioned water-cooled condenser 3 and an electric heater 15 are contained within the unit container 13.

The pump 11 inhales the second refrigerant and then pumps it out in order to circulates it along the second circulation path 10. The second refrigerant liquid pumped by the pump 11 circulates along the second circulation path 10 in liquid phase without changing its phase. The second refrigerant takes sensible heat change due to heat-changing.

The radiator 12 is a unit for radiating heat of the second refrigerant to fresh air. The fresh air is blown to the radiator 12 by an electric fan or air flow due to a vehicle running and then heat-exchange is achieved between the second refrigerant and the fresh air.

The electric heater 15 is provided beneath the water-cooled condenser 13 and heats the second refrigerant by its heat with being energized.

The heater core 14 heats air passing through it by achieving heat-exchanging between the second refrigerant and the air passing through it. The heater core 14 is provided within the air-conditioning duct 30.

A radiator-bypass path 16 is provided in the second circulation path 10 so as to bypass the radiator 12. The flow of the second refrigerant can be changed into the radiator 12 or the radiator-bypass path 16 by changing over a flow-path changeover valve 17 provided upstream of the radiator 12.

The gas-liquid separator 6 has a refrigerant tank 6a within its inside as shown in Fig. 2. A refrigerant inlet 1a is connected at an upper portion of the refrigerant tank 6a. The refrigerant inlet 1a configures a part of the first circulation path 1. A refrigerant outlet opening 1b is opened at a lower portion of the refrigerant tank 6a. The refrigerant outlet 1b is connected to the evaporator 7 and configures a part of the first circulation path 1. the refrigerant liquid is output from the refrigerant outlet 1b to the evaporator 7. The bypass path 9 for the refrigerant gas is also connected at the upper portion of the refrigerant tank 6a. The refrigerant gas is output through the bypass path 9 to the changeover valve 8. In addition, the bypass path 9 is led out of the refrigerant tank 6a via the lower portion of the refrigerant tank 6a and a position where the refrigerant liquid is normally held. The inside of the bypass path 9 communicates with the inside of the refrigerant tank 6a through an oil breed hole 9a at the position where the refrigerant liquid is held.

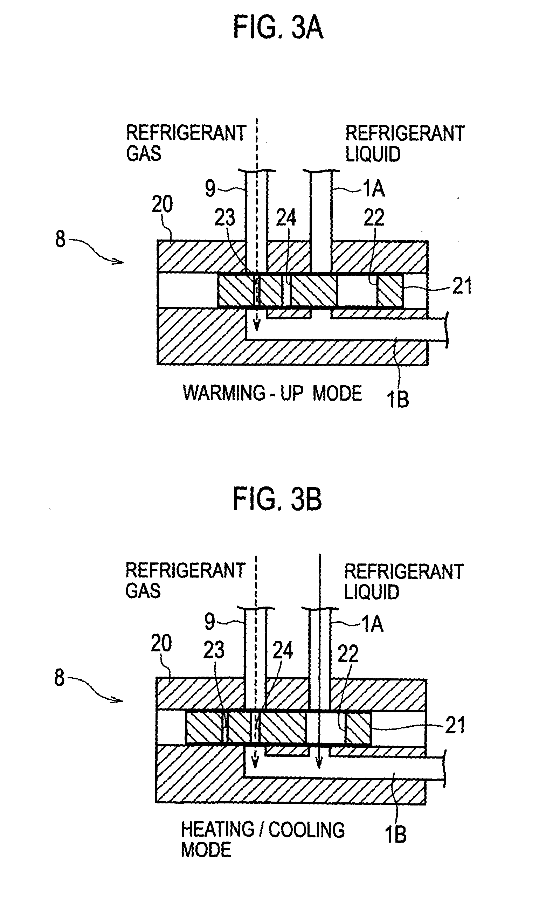

The changeover valve 8 has a valve housing 20 as shown in Figs. 3A and 3B. The first circulation path 1A from the evaporator 7 ("1A" is allocated for distinction in Figs. 3A and 3B) and the bypass path 9 are connected to two inlet ports of the valve housing 20, respectively. The first circulation path 1B led out to the compressor 2 ("1B" is allocated for distinction in Figs. 3A and 3B) is connected to two outlet ports of the valve housing 20. A valve element 21 is provided within the valve housing 20. The valve element 21 includes a path 22 for the refrigerant liquid. The valve element 21 also includes a first orifice 23 and a second orifice 24 for the refrigerant gas. The first orifice 23 has a smaller inner diameter than that of the second orifice 24. The first orifice 23 provides large flowing resistance and the second orifice 24 provides small flowing resistance. Specifically, the flowing resistance of the first orifice 23 is set to be optimum for warming-up mode and the second orifice 24 is set to be optimum for heating/cooling mode. The valve element 21 moves between a first position (Fig. 3A) and a second position (Fig. 3B) according to a changeover command from a controller.

With respect to the first position shown in Fig. 3A, the refrigerant liquid flowing between the first circulation path 1A and the first circulation path 1B is blocked and the refrigerant gas flowing between the bypass path 9 and the first circulation path 1B is allowed through the first orifice 23. Therefore, the refrigerant liquid does not flow into the evaporator 7 and only the refrigerant gas circulates in the refrigeration cycle.

With respect to the second position shown in Fig. 3B, the refrigerant liquid flowing between the first circulation path 1A and the first circulation path 1B is allowed and the refrigerant gas flowing between the bypass path 9 and the first circulation path 1B is also allowed through the second orifice 24. Therefore, the refrigerant liquid flows into the evaporator 7 and the refrigerant gas circulates in the refrigeration cycle with bypassing the evaporator 7 through the bypass path 9.

Next, configurations within the air-conditioning duct 30 will be explained. An air selector door (not shown) and a blower fan 31 are provided within the air-conditioning duct 30 in this order. The air selector door is changed its position between an interior-air position for inhaling air inside a vehicle compartment (interior air) and a fresh-air position for inhaling air outside the vehicle compartment (fresh air). Interior air or fresh air is inhaled into the air conditioning duct 30 by flowing force of the blower fan 31.

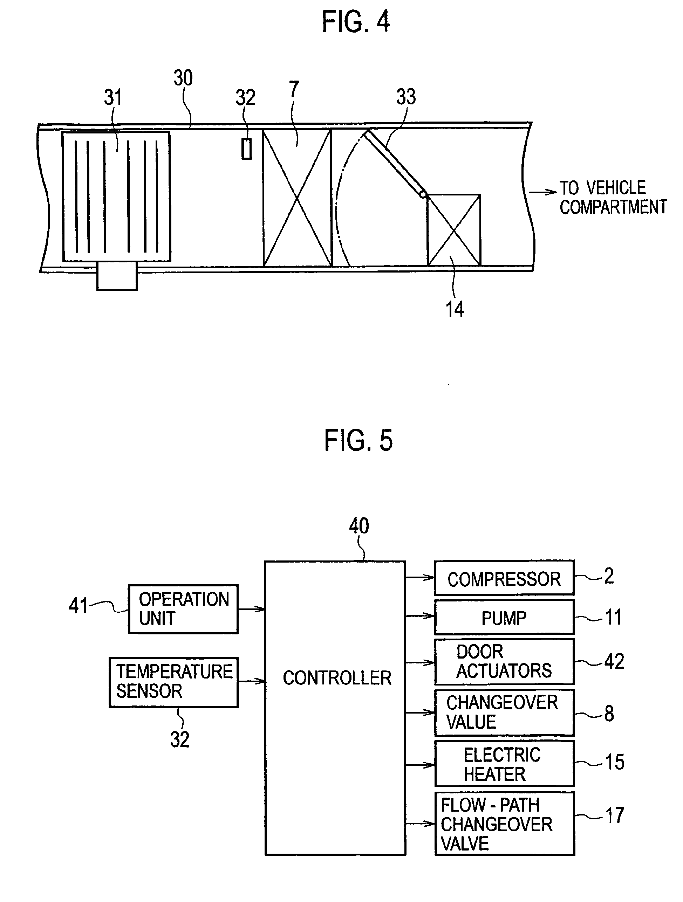

The evaporator 7 and the heater core 14 is further provider within the air-conditioning duct 30 in this order. A temperature sensor 32 is provided just upstream the evaporator 7. The temperature sensor 32 detects air temperature before passing through the evaporator 7 (intake air temperature) to output it to the controller 40 (see Fig. 5). A mixture door 33 is provided between the evaporator 7 and the heater core 14. The mixture door 33 adjusts how much rate of cooled air from the evaporator 7 to be sent to the heater core 14. In warming-up mode, full heating mode and so on, entire air passing through the evaporator 7 is sent to the heater core 14. Air passing-through and bypassing the heater core 14 is blown out from desired ventilation grills.

Next, control system of air conditioning system for a vehicle will be explained in outline. As shown in Fig. 5, an input command (heating operation command, cooling operation command or the like) from a operation unit 41 and a detection signal of the temperature sensor 32 are input to the controller 40. The controller 40 controls the compressor 2, the pump 11, door actuators 42, the changeover valve 8, the electric heater 15, the flow-path changeover valve 17 and so on based on the input command by a user, detection information of the temperature sensor 32 or the like. The door actuators 42 actuate the air selector door (not shown), the mixture door 33 and so on.

Next, will be explained behavior of the air conditioning system for a vehicle in the present embodiment under heating operation.

On generating the heating operation command, the controller 40 drives the door actuators 42 to move the mixture door 33 to the position so that entire cooled air from the evaporator 7 will be sent to the heater core 14 (Fig. 4) and to move the air selector door (not shown) to the interior-air position. In addition, the controller 40 drives the compressor 2 and the pump 11 and controls the flow-path changeover valve 17 so as to flow the refrigerant to the radiator-bypass path 16.

The controller 40 gets the detected temperature by the temperature sensor 32 parallel to the above controls. The changeover valve 8 is set to the first position (Fig. 3A) to achieve the warming-up mode when the detected temperature by the temperature sensor 32 is not more than a predetermined temperature (e.g. -20 deg C). Basically the detected temperature by the temperature sensor 32 at starting-up may be equal to outside temperature.

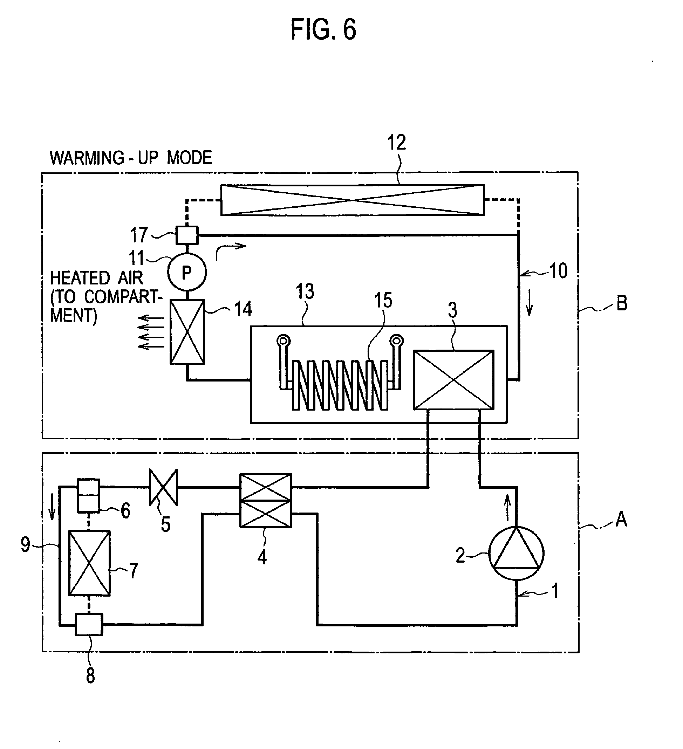

As mentioned above, the first refrigerant in the heat-pump type cooling unit A is separated into gas phase (refrigerant gas) and liquid phase (refrigerant liquid) by the gas-liquid separator 6. In the warming-up mode, the refrigerant liquid does not flow into the evaporator 7 and only the refrigerant gas circulates in the refrigeration cycle with bypassing the evaporator 7 through the bypass path 9 as shown in Fig. 6. Therefore, the first refrigerant is heated by heat quantity equivalent to work of the compressor 2 and heat of the first refrigerant is radiated at the water-cooled condenser 3. The second refrigerant in the air-heating circulation unit B is heated by heat-radiation at the water-cooled condenser 3 and heat of the second refrigerant is radiated at the heater core 14 to heat flowing air within the air-conditioning duct 30. The heated air by the heater core 14 is blown out into a vehicle compartment.

Therefore, the vehicle compartment can be heated by using the heat-pump type cooling unit A regardless of outside temperature.

Note that, in case where the electric heater 15 is further used, since the second refrigerant is heated by both heat quantity equivalent to work of the compressor 2 and heat quantity by the electric heater 15, heating can be done more quickly.

As the vehicle compartment is warmed up gradually as mentioned above, the detected temperature by the temperature sensor 32 will gradually increases. The controller 40 continuously checks the detected temperature by the temperature sensor 32 and changes the changeover valve 8 to the second position (Fig. 3B) to achieve the heating mode when the detected temperature becomes more than the predetermined temperature (e.g. -20 deg C) to .

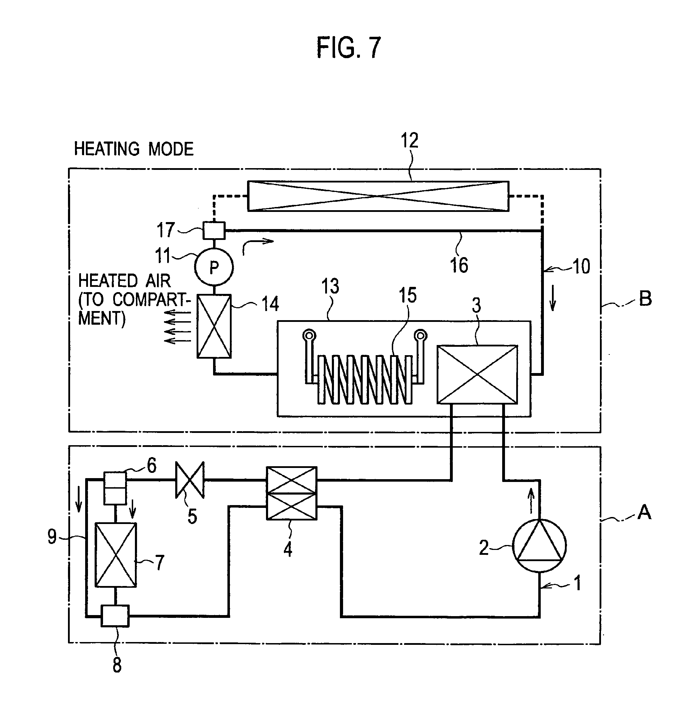

As mentioned above, the first refrigerant in the heat-pump type cooling unit A is separated into gas phase (refrigerant gas) and liquid phase (refrigerant liquid) by the gas-liquid separator 6. In the heating mode, the refrigerant liquid flows into the evaporator 7 and the refrigerant gas circulates in the refrigeration cycle with bypassing the evaporator 7 through the bypass path 9 as shown in Fig. 7. Therefore, the first refrigerant is heated by heat quantity equivalent to work of the compressor 2 and condensation of the first refrigerant. Then, heat of the first refrigerant is radiated at the water-cooled condenser 3. The second refrigerant in the air-heating circulation unit B is heated by heat-radiation at the water-cooled condenser 3 and heat of the second refrigerant is radiated at the heater core 14 to heat flowing air within the air-conditioning duct 30. The heated air by the heater core 14 is blown out into a vehicle compartment.

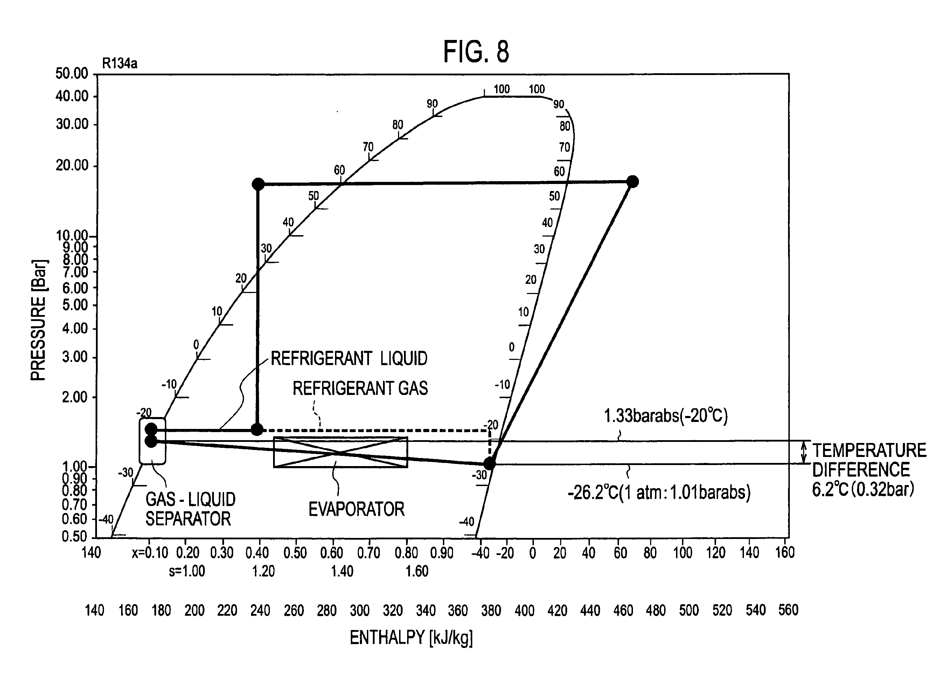

In the heating mode, the refrigerant liquid output from the gas-liquid separator 6 flows into the evaporator 7 for heat-exchanging at the evaporator 7. A refrigerant evaporating pressure at an outlet port of the evaporator 7 can be reduced by a pressure equivalent to flowing resistance reduction due to the gas-liquid separator 6 (between the orifices 23 and 24) and bypassing the evaporator 7 as shown in Fig. 8 compared with the conventional system where a gas-liquid separator is provided between an evaporator and a compressor. Therefore, temperature difference between the first refrigerant and the air passing through the evaporator 7 even under a very low temperature condition (e.g. almost -20 deg C) can be made larger than the conventional system. As a result, heat-exchanging can be achieved efficiently and heating performance in the heating mode can be improved. In the conventional system, an evaporating temperature of the first refrigerant must be -20 deg C at least as shown in Fig. 10. Therefore, heat-exchanging for air-heating cannot be achieved if air temperature before passing through the evaporator (intake air temperature) is -20 deg C. On the contrary, an evaporating temperature of the first refrigerant can be -26.2 deg C at least in the present embodiment as shown in Fig. 8. Heat-exchanging for air-heating can be achieved even if the air temperature before passing through the evaporator 7 (intake air temperature) is -20 deg C.

Since the refrigerant gas, which can not be contributed to heat-absorption at the evaporator 7, bypasses the evaporator 7, heat-exchange efficiency of the evaporator can be improved. The heating performance in the heating mode can be improved in this view point.

On generating the cooling operation command (in the cooling mode), almost the same operations are done as the heating mode. The flow-path changeover valve 17 is changed so as to flow the refrigerant to the radiator 12. Therefore, heat of the first refrigerant is radiated outside the vehicle compartment by the radiator 12. In addition, the mixture door 33 is moved to a position for restricting a flow amount to the heater core 14. Then, the first refrigerant cools flowing air within the air-conditioning duct 30 by the evaporator. Cooled air air-conditioned with the cooled air by the evaporator 7 and/or heated air passing through the heater core 14 is supplied into the vehicle compartment.

In the above embodiment, the pump 11 for circulating the second refrigerant, the component container 13 for arranging the water-cooled condenser 3 on the second circulation path 10, the heater core 14 for heating air by heat-exchanging between the second refrigerant and the air, the radiator 12 for radiating heat of the second refrigerant are provided, and the second refrigerant is fluid to achieve heat-exchanging with sensible heat change. Therefore, air-heating and air-cooling can be done by way of the heat-radiation by the heater core 14 in the hearing mode and by the radiator 12 in the cooling mode. In addition, since the condenser 3 is a water-cooling type with higher heat-transfer efficiency than an air-cooling type, it can be down-sized and thereby flowing resistance of the first refrigerant can be reduced. As a result, since needed power for driving the compressor 2 can be reduced by the flowing resistance reduction, driving force for the compressor 2 can be saved and thereby the compressor can be down-sized. Furthermore, since the refrigerant in the second circulation path 10 does not change its phase in a liquid phase but takes sensible heat change, heat-transfer efficiency can be further improved and down-sizing can be achieved.

In the above embodiment, the refrigerant liquid flow preventing unit is the changeover valve 8 which can be changed over between the first position and the second position. When the changeover valve 8 is set to the first position, the bypass path 9 is communicated with the first circulation path 1 and the refrigerant flowing between the first circulation path 1A and the first circulation path 1B (see Figs. 3A and 3B) is blocked so as not to flow the refrigerant into the evaporator 7. When the changeover valve 8 is set to the second position, the bypass path 9 is communicated with the first circulation path 1 and the refrigerant flowing between the first circulation path 1A and the first circulation path 1B (see Figs. 3A and 3B) is allowed so as to flow the refrigerant into the evaporator 7. Therefore, since operation mode (between the warming-up mode and the heating/cooling mode) can be changed over by way of changeover control of the changeover valve 8, changeover operation can be done easily.

In the above embodiment, the first orifice 23 and the second orifice 24 are provided on the bypass path 9 (specifically within the changeover valve 8). Even if the refrigerant liquid flows through the bypass path 9, the refrigerant liquid is gasified again. Therefore, it can be prevented that the refrigerant liquid returns to the compressor 2.

In the above embodiment, the changeover valve 8 includes the first orifice 23 for allowing the refrigerant gas flowing at its first position and the second orifice 24 for allowing the refrigerant gas flowing at its second position. The flowing resistance of the first orifice 23 is set adequately for the warming-up mode. The flowing resistance of the second orifice 24 is set adequately for the heating/cooling mode. Although flow quantity of the refrigerant gas may be differentiated between the warming-up mode and the heating/cooling mode, appropriate flowing resistance can be set for each mode.

In the above embodiment, the bypass path 9 passes through a position where the refrigerant liquid is normally held within the refrigerant tank 6a of the gas-liquid separator 6 and the inside of the bypass path 9 communicates with the inside of the refrigerant tank 6a through the oil breed hole 9a at the position. Therefore, since oil is circulated together with the refrigerant gas downstream the bypass path 9, the oil can be returned to the compressor 2 even in the warming-up mode. As a result, reliability of the compressor 2 can be ensured.

In the above embodiment, changeover between the warming-up mode (it is prevented that the refrigerant liquid flows into the evaporator 7) and the heating mode (it is allowed that the refrigerant liquid flows into the evaporator 7) is done based on the intake air temperature. Since it depends on the intake air temperature of the evaporator 7 whether or not the evaporator 7 can done appropriate heat-exchanging, mode changeover can be done appropriately by way of the mode changeover based on the intake air temperature of the evaporator 7.

In addition, changeover control between the warm-up mode and the heating mode may be done based on the refrigerant pressure at the inlet side of the compressor 2. Since it depends on the refrigerant pressure at the inlet side of the compressor 2 whether or not the refrigerant pressure at the inlet side of the compressor 2 is equal-to or lower-than the atmosphere pressure, mode changeover can be done appropriately by way of the mode changeover based on the refrigerant pressure at the inlet side of the compressor 2. Note that changeover between the warming-up mode and the heating mode may be done based on both the intake air temperature of the evaporator 7 and the refrigerant pressure at the inlet side of the compressor 2.

In the above embodiment, entire of the cooled air passing through the evaporator 7 is returned to the vehicle compartment in the heating mode. However, entire or some of the cooled air passing through the evaporator 7 may be ejected outside the vehicle compartment. When the temperature of the cooled air passing through the evaporator 7 is lower than outside temperature, heating performance can be improved.

In the above embodiment, the electric heater 15 is used. However, the same workings and advantages can be achieved by a combustion heater or the like.

In the above embodiment, HFC134a is used as the first refrigerant and water, antifreeze solution or the like is used as the second refrigerant. Other refrigerant may be used.

## Claims

1. An air conditioning system comprising
a heat-pump type cooling unit (A) including a first circulation path (1) in which a first refrigerant circulates and
an air-heating unit (B) including a second circulation path (10) in which a second refrigerant circulates,
wherein,
on the first circulation path (1), provided are
a compressor (2) for compressing the first refrigerant,
a condenser (3) for heat-exchanging between the first refrigerant and the second refrigerant and radiating heat of the first refrigerant,
an expansion unit (5) for expanding the first refrigerant, and
an evaporator (7) for heat-exchanging between the first refrigerant expanded by the expansion unit (5) and air to cool the air;
the air-heating unit (B) achieves air-heating by using heat radiated by the condenser (3); and
the system further comprises
a gas-liquid separator (6) provided between the expansion unit (5) and the evaporator (7) for separating the first refrigerant supplied from the expansion unit (5) into first refrigerant gas and first refrigerant liquid and sending the first refrigerant liquid to the evaporator (7),
a bypass path (9) for flowing the first refrigerant gas through the first circulation path (1) with bypassing the evaporator (7), and
a refrigerant liquid flow preventing unit (8) for preventing the first refrigerant liquid from flowing into the evaporator (7).

2. The air conditioning system according to claim 1, wherein,
on the second circulation path (10), provided are
a pump (11) for circulating the second refrigerant,
a component container (13) for arranging the condenser (3) also on the second circulation path (10),
a heater core (14) for heating air by heat-exchanging between the second refrigerant and the air, and
a radiator (12) for radiating heat of the second refrigerant; and
the second refrigerant is fluid to achieve heat-exchanging with sensible heat change.

3. The air conditioning system according to claim 1, wherein,
a fist orifice (23) and a second orifice (24) are capable of provided on the bypass path (9) alternatively.

4. The air conditioning system according to any one of claims 1 to 3, wherein,
the refrigerant liquid flow preventing unit (8) is a changeover valve (8) capable of moving between a first position and a second position,
when the changeover valve (8) is set to the first position, the bypass path (9) is communicated with the first circulation path (1) and the first circulation path (1) is blocked so as not to flow the first refrigerant liquid into the evaporator (7), and
when the changeover valve (8) is set to the second position, the bypass path (9) is communicated with the first circulation path (1) and the first circulation path (1) is opened so as to flow the first refrigerant liquid into the evaporator (7).

5. The air conditioning system according to claim 4, wherein,
the changeover valve (8) has a first orifice (23) to make the first refrigerant gas passing through at the first position and a second orifice (24) to make the first refrigerant gas passing through at the first position, and
flowing resistance of the first orifice (23) is set to be optimum for warming-up mode and flowing resistance of the second orifice (24) is set to be optimum for heating/cooling mode.

6. The air conditioning system according to any one of claims 1 to 5, wherein,
the bypass path (9) passes through a position where the first refrigerant liquid is normally held within a refrigerant tank (6a) within the gas-liquid separator (6), and
the inside of the bypass path (9) communicates with the inside of the refrigerant tank (6a) through an oil breed hole (9a) at the position.

7. The air conditioning system according to any one of claims 1 to 6, wherein,
changeover between the warming-up mode, in which it is prevented that the first refrigerant liquid flows into the evaporator (7), and the heating mode, in which it is allowed that the refrigerant liquid flows into the evaporator (7), is done based on at least one of intake air temperature into the evaporator (7) and refrigerant pressure at an inlet side of the compressor (2).
